(19) Europäisches Patentamt / European Patent Office / Office européen des brevets

(11) **EP 3 153 539 B1**

(12) **EUROPEAN PATENT SPECIFICATION**

(45) Date of publication and mention
of the grant of the patent:
**18.12.2024 Bulletin 2024/51**

(21) Application number: **15803165.8**

(22) Date of filing: **04.06.2015**

(51) International Patent Classification (IPC):
**C08G 73/10** (2006.01)    **C08J 5/18** (2006.01)

(52) Cooperative Patent Classification (CPC):
**C08G 73/1032; C08G 73/10; C08G 73/1039;
C08G 73/1078; C08J 5/18**

(86) International application number:
**PCT/JP2015/066173**

(87) International publication number:
**WO 2015/186782 (10.12.2015 Gazette 2015/49)**

(54) **METHOD FOR PRODUCING POLYIMIDE FILM**

VERFAHREN ZUR HERSTELLUNG EINES POLYMIDFILMS

PROCÉDÉ DE PRODUCTION D'UN FILM DE POLYIMIDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.06.2014 JP 2014115815**

(43) Date of publication of application:
**12.04.2017 Bulletin 2017/15**

(73) Proprietor: **Ube Corporation
Ube-shi, Yamaguchi 755-8633 (JP)**

(72) Inventors:
• **NAKAYAMA, Tomonori
Ube-shi
Yamaguchi 755-8633 (JP)**
• **INOUE, Shohei
Ube-shi
Yamaguchi 755-8633 (JP)**
• **NAKAYAMA, Takeshige
Ube-shi
Yamaguchi 755-8633 (JP)**
• **YAMASHITA, Hiroo
Ube-shi
Yamaguchi 755-8633 (JP)**
• **KITAYAMA, Naoki
Ube-shi
Yamaguchi 755-8633 (JP)**

(74) Representative: **Plasseraud IP
104 Rue de Richelieu
CS92104
75080 Paris Cedex 02 (FR)**

(56) References cited:
**EP-A1- 2 907 838        WO-A1-2013/179727
JP-A- 2014 040 503        JP-A- 2014 074 886
JP-A- 2014 157 310        JP-A- 2015 014 705
JP-A- 2015 017 229        JP-A- H07 310 048
US-A1- 2009 023 886       US-A1- 2012 308 835
US-A1- 2014 058 036       US-A1- 2015 158 980**

EP 3 153 539 B1

**Description**

Technical Field

The present invention relates to a use of at least one solvent selected from the group consisting of N-methylformamide, N,N-dimethylpropionamide, N,N-dimethylisobutylamide, and tetramethylurea for improving the light transmittance of a polyimide film.

Background Art

Polyimide, which is obtained by reacting tetracarboxylic acid compound and diamine, has excellent properties such as heat resistance, mechanical strength, electrical properties, and solvent resistance, and therefore it has been widely used in various fields including the electrical/electronic field. However, aromatic polyimide in particular has low solubility in solvents, and therefore polyimide is commonly obtained by applying a solution composition in which a polyimide precursor such as polyamic acid is dissolved in an organic solvent on a substrate, for example, and then imidizing the polyimide precursor by heating the solution composition at a high temperature, and the like. A nitrogen-containing organic solvent such as N-methyl-2-pyrrolidone is commonly used as the organic solvent in which the polyamic acid is dissolved.

In general, aromatic polyimide is intrinsically yellowish-brown-colored due to the intramolecular conjugation and the formation of the charge-transfer complex. Additionally, it is assumed that when a nitrogen-containing solvent is used for the production of polyimide, coloring derived from the solvent occurs at a high temperature. In order to remedy the problem of such coloring, the addition of phosphoric ester (Patent Literature 1) and the use of a high-purity solvent (Patent Literature 2) are proposed.

Citation List

Patent Literature

Patent Literature 1: JP-A-2012-41473
Patent Literature 2: JP-A-2013-23597

Summary of Invention

Technical Problem

An object of the present invention is to provide a use of at least one solvent selected from the group consisting of N-methylformamide, N,N-dimethylpropionamide, N,N-dimethylisobutylamide, and tetramethylurea for improving the light transmittance of a polyimide film.

Solution to Problem

The present invention is as follows:
Use of at least one solvent selected from the group consisting of N-methylformamide, N,N-dimethylpropionamide, N,N-dimethylisobutylamide, and tetramethylurea to improve the light transmittance of a polyimide film, wherein the polyimide film is produced by applying a polyamic acid solution composition which comprises a polyamic acid and said solvent to a substrate; and then imidizing the polyamic acid by subjecting the composition to heat treatment under the conditions that the highest heating temperature is 200°C or higher.

Advantageous Effects of Invention

According to the present invention, there may be provided a method for improving the light transmittance of a polyimide film.

The polyimide film obtained has reduced coloring and improved light transmittance, and therefore the polyimide film may be suitably used in applications where both transparency and heat resistance are required simultaneously.

Description of Embodiments

A polyamic acid solution composition which comprises a certain solvent and a polyamic acid is applied to a substrate, and then the polyamic acid is imidized by subjecting the composition to heat treatment, to obtain a polyimide film.

The solvent of the polyamic acid solution composition used in the present invention is at least one solvent selected from the group consisting of N-methylformamide, N,N-dimethylpropionamide, N,N-dimethylisobutylamide, and tetramethylurea. The coloring of the obtained polyimide film may be reduced by using the solvents instead of N,N-dimethylformamide, N-methyl-2-pyrrolidone, and the like, which have been commonly used. The light transmittance of the obtained polyimide film may be improved by using the solvents in the production of the polyimide film by applying a polyamic acid solution composition which comprises a polyamic acid and a solvent to a substrate; and then imidizing the polyamic acid by subjecting the composition to heat treatment under the conditions that the highest heating temperature is 200°C or higher, in particular. Incidentally, the coloring generally does not become a problem when the polyimide film is produced by a low-temperature imidization in which the highest heating temperature is lower than 200°C.

The polyamic acid may be obtained by reacting a tetracarboxylic acid component and a diamine component, which are monomer components.

Examples of the tetracarboxylic acid component constituting the polyamic acid include tetracarboxylic acid compounds having an alicyclic structure such as norbornane-2-spiro-$\alpha$-cyclopentanone-$\alpha$'-spiro-2"-norbornane-5,5",6,6"-tetracarboxylic dianhydride, N,N'-(1,4-phenylene)bis(1,3-dioxooctahydroisobenzofuran-5-carboxyamide) and (4arH, 8acH)-decahydro-1t,4t:5c,8c-dimethanonaphthalene-2t,3t,6c,7c-tetracarboxylic dianhydride; tetracarboxylic acid compounds containing fluorine such as 2,2-bis(3,4-dicarboxyphenyl)hexafluoropropane dianhydride; and tetracarboxylic acid compounds having a fluorene skeleton such as 9,9-bis(3,4-dicarboxyphenyl) fluorene dianhydride. Any of these compounds may be used in combination with each other. The "tetracarboxylic acid compound" means tetracarboxylic acid, and tetracarboxylic acid derivatives including tetracarboxylic dianhydride.

Examples of the diamine component constituting the polyamic acid include diamines having an alicyclic structure such as trans-1,4-cyclohexanediamine; diamines containing fluorine such as 2,2'-bis(trifluoromethyl)-4,4'-diaminobiphenyl and 2,2-bis(3-amino-4-hydroxyphenyl)hexafluoropropane; and diamines having a fluorene skeleton such as 9,9-bis(4-aminophenyl)fluorene. Any of these compounds may be used in combination with each other.

In the case where the transparency is regarded as relatively important in the obtained polyimide film, the polyamic acid may be preferably a polyamic acid obtained using a monomer component selected from tetracarboxylic acid compounds having an alicyclic structure and diamines having an alicyclic structure in an amount of 25 mol% or more, particularly preferably 50 mol% or more, in total, although the polyamic acid used in the present invention is not limited thereto. The monomer component may comprise either one or more tetracarboxylic acid compounds having an alicyclic structure, or one or more diamines having an alicyclic structure, or may comprise both.

In the case where the transparency is regarded as relatively important in the obtained polyimide film, a polyamic acid obtained using a monomer component selected from tetracarboxylic acid compounds containing fluorine and diamines containing fluorine in an amount of 25 mol% or more, particularly preferably 50 mol% or more, in total, and a polyamic acid obtained using a monomer component selected from tetracarboxylic acid compounds having a fluorene structure and diamines having a fluorene structure in an amount of 25 mol% or more, particularly preferably 50 mol% or more, in total, are also preferred. In this case, the monomer component may comprise either one or more tetracarboxylic acid compounds containing fluorine, or one or more diamines containing fluorine, or may comprise both. Meanwhile, the monomer component may comprise either one or more tetracarboxylic acid compounds having a fluorene structure, or one or more diamines having a fluorene structure, or may comprise both.

Additionally, examples of the tetracarboxylic acid component which may be used in the present invention include 3,3',4,4'-biphenyltetracarboxylic acid compound such as 3,3',4,4'-biphenyltetracarboxylic dianhydride; 2,3,3',4'-biphenyltetracarboxylic acid compound such as 2,3,3',4'-biphenyltetracarboxylic dianhydride; pyromellitic acid compound such as pyromellitic dianhydride; and 4,4'-oxydiphthalic acid compound such as 4,4'-oxydiphthalic dianhydride. Any of these compounds may be used in combination with each other.

Meanwhile, examples of the diamine component which may be used in the present invention include 4,4'-diaminodiphenyl ether, p-phenylenediamine, 4,4'-diaminobenzanilide, and 4,4'-bis(4-aminophenoxy)biphenyl. Any of these compounds may be used in combination with each other.

The polyimide film obtained using a polyamic acid consisting of any combination of these tetracarboxylic acid components and these diamine components has particularly excellent heat resistance. In the case where the heat resistance is regarded as important relatively, the monomer component may be preferably selected from them. For example, the polyamic acid may be preferably the one obtained using a tetracarboxylic acid component consisting of at least one selected from 3,3',4,4'-biphenyltetracarboxylic acid compound, 2,3,3',4'-biphenyltetracarboxylic acid compound, 4,4'-oxydiphthalic acid compound and pyromellitic acid compound, and a diamine component consisting of at least one selected from 4,4'-diaminodiphenyl ether and p-phenylenediamine.

Additionally, the monomer component used in the case where the transparency is regarded as relatively important (tetracarboxylic acid compound having an alicyclic structure, diamine having an alicyclic structure, tetracarboxylic acid compound containing fluorine, diamine containing fluorine, tetracarboxylic acid compound having a fluorene structure, diamine having a fluorene structure) as described above, and the monomer component used in the case where the heat resistance is regarded as relatively important (3,3',4,4'-biphenyltetracarboxylic acid compound, 2,3,3',4'-biphenyltetracarboxylic acid compound, pyromellitic acid compound, 4,4'-oxydiphthalic acid compound, 4,4'-diaminodiphenyl ether, p-phenylenediamine, 4,4'-diaminobenzanilide, and 4,4'-bis(4-aminophenoxy)biphenyl) may be used in combination.

The polyamic acid used in the present invention may be produced and obtained in the form of a polyamic acid solution composition by reacting a tetracarboxylic acid component and a diamine component, which are used in substantially equimolar amounts, in a solvent at a relatively low temperature of 100°C or lower, preferably 80°C or lower, so as to suppress the imidization reaction. It is preferred that a tetracarboxylic acid component is added at a time or in multiple steps to a solution in which a diamine component is dissolved in a solvent, and then the resulting mixture is stirred and reacted, although the process is not limited thereto. Generally, the reaction temperature may be 25°C to 100°C, preferably 40°C to 80°C, more preferably 50°C to 80°C, and the reaction time may be 0.1 hours to 24 hours, preferably 2 hours to 12 hours. When the reaction temperature and the reaction time are set within the ranges as described above, a polyamic acid having a high molecular weight may be produced with good production efficiency. Additionally, the reaction is usually preferably performed in an inert gas atmosphere, preferably in a nitrogen gas atmosphere, although the reaction may be performed in an air atmosphere. The "tetracarboxylic acid component such as tetracarboxylic dianhydride and diamine component in substantially equimolar amounts" specifically means that the molar ratio of them [tetracarboxylic acid component / diamine component] is 0.90 to 1.10, preferably 0.95 to 1.05.

Besides the solvents used in the present invention as described above, solvents which have been conventionally used in the production of the polyamic acid may be also used for the production of the polyamic acid. In this case, however, it is necessary to isolate the polyamic acid from the obtained polyamic acid solution, and then dissolve the polyamic acid in the solvent used in the present invention to provide a polyamic acid solution which is for use. In view of the productivity and the cost, it is preferred that the obtained polyamic acid solution is used as it is, without isolating the polyamic acid from the obtained polyamic acid solution, and therefore it is preferred that the production of the polyamic acid is carried out using the solvent used in the present invention, that is, at least one solvent selected from the group consisting of N-methylformamide, N,N-dimethylpropionamide, N,N-dimethylisobutylamide, and tetramethylurea.

The polyamic acid used in the present invention may preferably have a high molecular weight, specifically, the inherent (logarithmic) viscosity, which is measured at a temperature of 30°C and a concentration of 0.5 g/100 mL, may be preferably 0.2 or more, preferably 0.4 or more, more preferably 0.6 or more, more preferably 0.8 or more, particularly preferably 1.0 or more, or more than 1.0. When the inherent viscosity is lower than the range as described above, the polyamic acid has a low molecular weight, and therefore it may be difficult to provide a polyimide having high properties.

As for the polyamic acid solution composition used in the present invention, the solid content based on the polyamic acid may be preferably 5 wt% to 45 wt%, more preferably 5 wt% to 40 wt%, further preferably more than 5 wt% to 30 wt%, relative to the total amount of the polyamic acid and the solvent. When the solid content is lower than 5 wt%, the handling in use may be reduced. When the solid content is higher than 45 wt%, the solution may lose the fluidity.

In view of the handling, the solution viscosity at 30°C of the polyamic acid solution composition of the present invention may be preferably, but not limited to, 1000 Pa·sec or lower, more preferably 0.5 Pa·sec to 500 Pa·sec, further preferably 1 Pa·sec to 300 Pa·sec, particularly preferably 2 Pa·sec to 200 Pa·sec.

The polyamic acid solution composition used in the present invention may comprise various additives, as necessary. For example, fine inorganic or organic fillers such as finely-powdered silica, boron nitride, alumina, and carbon black may be mixed therein, and furthermore other ingredients may be mixed therein, as necessary. As the other ingredients, plasticizer, weathering agent, antioxidant, thermal stabilizer, lubricant, antistat, whitener, colorant such as dye and pigment, conductive agent such as metal powder, release agent, surface treatment agent, viscosity regulator, coupling agent, surfactant, or the like may be suitably mixed therein, which may be determined depending on the intended use or the required properties. These ingredients may be mixed into the solution composition beforehand, or may be added and mixed into the solution composition at the time of use.

Polyimide is formed by subjecting the polyamic acid solution composition to heat treatment. More specifically, a polyimide film is formed by applying the polyamic acid solution composition to a substrate, and then subjecting the composition to heat treatment wherein the solvent is removed and the imidization reaction proceeds.

The substrate used in the present invention is the one on which the polyamic acid solution composition can be applied to form a film, and is not limited in terms of shape and material, on the condition that the substrate has a dense structure such that liquid and gas do not substantially penetrate through the substrate. Preferable examples of the substrate include substrates for film formation which are commonly used when a film is produced, and known per se, including a belt, a roll or a mold; a circuit board or an electronic part on which a polyimide film is formed as a protective film; a part or a product on which a film is formed, including a sliding part; and one polyimide film in the formation of the multilayered film subsequent to the formation of the polyimide film. Additionally, a seamless belt may be produced by centrifugal forming in which an inner surface or an outer surface of a cylindrical mold is used as the substrate and a film is formed (molded) while rotating the mold.

There are no restrictions as to the application method for forming a film on the substrate. Any method which is known per se, including spray coating method, roll coating method, spin coating method, bar coating method, inkjet method, screen printing method, and slit coating method, for example, may be adopted as appropriate.

The film consisting of the polyamic acid solution composition, which is formed by applying the solution composition on the substrate, may be deaerated by a method in which the film is heated at a relatively low temperature under reduced pressure, for example, prior to the heat treatment for imidization.

The film consisting of the polyamic acid solution composition, which is formed by applying the solution composition on the substrate, is subjected to heat treatment, thereby removing the solvent and imidizing the polyamic acid, to form a polyimide film. The heat treatment may be preferably a stepwise heat treatment in which the solvent is removed at a relatively low temperature of 140°C or lower firstly, and then the temperature is increased to the highest heat treatment temperature to imidize the polyamic acid. For example, it is preferred that the highest heat treatment temperature is set within the temperature range of 200°C or higher, preferably 250°C to 600°C, more preferably 300°C to 550°C, more preferably 350°C to 450°C, and the heat treatment is performed within the temperature range (200°C or higher, preferably 250°C to 600°C) for 0.01 hours to 20 hours, preferably 0.01 hours to 6 hours, more preferably 0.01 hours to 5 hours.

A polyimide film may be obtained by subjecting the polyamic acid solution composition applied on the substrate to heat treatment, and thereby imidizing the polyamic acid as described above. A polyimide film having reduced coloring and improved light transmittance may be obtained by the use of at least one solvent selected from the group consisting of N-methylformamide, N,N-dimethylpropionamide, N,N-dimethylisobutylamide and tetramethylurea as the solvent of the polyamic acid solution composition. The polyimide film may be separated from the substrate, as necessary. As necessary, another material may be laminated on the polyimide film which is formed on the substrate, and further the substrate may be separated from the obtained laminate to obtain a laminate consisting of the polyimide and the other material.

EXAMPLES

The present invention will be described in more detail hereinafter with reference to Examples. However, the present invention is not limited to the Examples as described below.

The abbreviations of the compounds used in the Examples as described below are as follows.

CpODA: norbornane-2-spiro-$\alpha$-cyclopentanone-$\alpha$'-spiro-2"-norbornane-5,5",6,6"-tetracarboxylic dianhydride

6FDA: 2,2-bis(3,4-dicarboxyphenyl)hexafluoropropane dianhydride H-TAC(PPD): N,N'-(1,4-phenylene)bis(1,3-dioxooctahydroisobenzofuran-5-carboxyamide)

s-BPDA: 3,3',4,4'-biphenyltetracarboxylic dianhydride

PPD: p-phenylenediamine

ODA: 4,4'-diaminodiphenyl ether

DABAN: 4,4'-diaminobenzanilide

TFMB: 2,2'-bis(trifluoromethyl)-4,4'-diaminobiphenyl

BAPB: 4,4'-bis(4-aminophenoxy)biphenyl

BAFL: 9,9-bis(4-aminophenyl)fluorene

DMIB: N,N-dimethylisobutylamide

TMU: tetramethylurea

DMP: N,N-dimethylpropionamide

NMF: N-methylformamide

NMP: N-methyl-2-pyrrolidone

The methods for measuring the properties, which were used in the Examples as described below, will be described below.

(Solid content)

The solid content of the polyamic acid solution was the value, which was calculated by the following formula from the weight before drying ($W_1$) and the weight after drying ($W_2$), wherein the polyamic acid solution was dried at 350°C for 30 minutes.

$$\text{Solid content (wt\%)} = (W_2 / W_1) \times 100$$

(Light transmittance)

The light transmittance at 400 nm or 500 nm of the polyimide film was measured using Spectrophotometer U-2910 (made by Hitachi High-Tech Science Corporation). (The light transmittance at 400 nm was measured in Examples 1 to 6 and Comparative Example 1; and the light transmittance at 500 nm was measured in Examples 7 to 8 and Comparative Examples 2 to 3.) Then the light transmittance of the film having a thickness of 10 μm or 50 μm was calculated therefrom using the Lambert-Beer Law. (The light transmittance of the film having a thickness of 10 μm was calculated in Examples 1 to 6 and Comparative Example 1; and the light transmittance of the film having a thickness of 50 μm was calculated in Examples 7 to 8 and Comparative Examples 2 to 3.)

[Example 1]

In a 500 mL (internal volume) glass reaction vessel equipped with a stirrer and a nitrogen-gas charging/discharging tube was placed 415.2 g of DMIB as a solvent. Then 8.12 g (0.075 mol) of PPD, 13.65 g (0.060 mol) of DABAN, 5.53 g (0.015 mol) of BAPB and 57.73 g (0.150 mol) of CpODA were added thereto, and the mixture was stirred at 50°C, to provide a polyamic acid solution having a solid content of 15.9 %.

The polyamic acid solution was applied on a glass plate as a substrate with a bar coater. The resulting film was heated from 50°C to 350°C at a temperature-increasing rate of 2°C/min, then heated from 350°C to 410°C at a temperature-increasing rate of 5°C/min, and then heated at 410°C for 5 minutes, to form a polyimide film on the glass plate.

The obtained polyimide film was peeled from the glass plate, and the light transmittance of the polyimide film was measured. The results are shown in Table 1.

[Example 2]

A polyamic acid solution having a solid content of 15.9 % was obtained by the same operation as in Example 1 except that 415.2 g of TMU was used as the solvent.

The polyamic acid solution was applied on a glass plate as a substrate with a bar coater, and the resulting film was heated in the same way as in Example 1, to form a polyimide film on the glass plate. The obtained polyimide film was peeled from the glass plate, and the light transmittance of the polyimide film was measured. The results are shown in Table 1.

[Example 3]

A polyamic acid solution having a solid content of 15.9 % was obtained by the same operation as in Example 1 except that 415.2 g of DMP was used as the solvent.

The polyamic acid solution was applied on a glass plate as a substrate with a bar coater, and the resulting film was heated in the same way as in Example 1, to form a polyimide film on the glass plate. The obtained polyimide film was peeled from the glass plate, and the light transmittance of the polyimide film was measured. The results are shown in Table 1.

[Example 4]

A polyamic acid solution having a solid content of 15.9 % was obtained by the same operation as in Example 1 except that 415.2 g of NMF was used as the solvent.

The polyamic acid solution was applied on a glass plate as a substrate with a bar coater, and the resulting film was heated in the same way as in Example 1, to form a polyimide film on the glass plate. The obtained polyimide film was peeled from the glass plate, and the light transmittance of the polyimide film was measured. The results are shown in Table 1.

[Example 5]

In a 500 mL (internal volume) glass reaction vessel equipped with a stirrer and a nitrogen-gas charging/discharging tube was placed 400.3 g of DMIB as a solvent. Then 41.92 g (0.131 mol) of TFMB and 58.15 g (0.131 mol) of 6FDA were added thereto, and the mixture was stirred at 50°C, to provide a polyamic acid solution having a solid content of 19.1 %.

The polyamic acid solution was applied on a glass plate as a substrate with a bar coater. The resulting film was heated at 120°C × 30 minutes, 150°C × 10 minutes, 200°C × 10 minutes, and then heated at 400°C for 5 minutes, to form a polyimide film on the glass plate.

The obtained polyimide film was peeled from the glass plate, and the light transmittance of the polyimide film was measured. The results are shown in Table 1.

[Example 6]

In a 500 mL (internal volume) glass reaction vessel equipped with a stirrer and a nitrogen-gas charging/discharging tube was placed 440.0 g of DMIB as a solvent. Then 25.58 g (0.073 mol) of BAFL and 34.39 g (0.073 mol) of H-TAC(PPD) were added thereto, and the mixture was stirred at 50°C, to provide a polyamic acid solution having a solid content of 11.5 %.

The polyamic acid solution was applied on a glass plate as a substrate with a bar coater. The resulting film was heated from 50°C to 350°C at a temperature-increasing rate of 5°C/min, and then heated at 350°C for 5 minutes, to form a polyimide film on the glass plate.

The obtained polyimide film was peeled from the glass plate, and the light transmittance of the polyimide film was measured. The results are shown in Table 1.

[Comparative Example 1]

A polyamic acid solution having a solid content of 15.9 % was obtained by the same operation as in Example 1 except that 415.2 g of NMP was used as the solvent.

The polyamic acid solution was applied on a glass plate as a substrate with a bar coater, and the resulting film was heated in the same way as in Example 1, to form a polyimide film on the glass plate. The obtained polyimide film was peeled from the glass plate, and the light transmittance of the polyimide film was measured. The results are shown in Table 1.

Table 1

| | | Example 1 | Example 2 | Example 3 | Example 4 | Example 5 | Example 6 | Comparative Example 1 |
|---|---|---|---|---|---|---|---|---|
| polyamic acid | | | | | | | | |
| acid component | CpODA (mol%) | 100 | 100 | 100 | 100 | | | 100 |
| | 6FDA (mol%) | | | | | 100 | | |
| | HTAC(PPD) (mol%) | | | | | | 100 | |
| diamine component | PPD (mol%) | 50 | 50 | 50 | 50 | | | 50 |
| | DABAN (mol%) | 40 | 40 | 40 | 40 | | | 40 |
| | TFMB (mol%) | | | | | 100 | | |
| | BAPB (mol%) | 10 | 10 | 10 | 10 | | | 10 |
| | BAFL (mol%) | | | | | | 100 | |
| solvent | | DMIB | TMU | DMP | NMF | DMIB | DMIB | NMP |
| polyimide film | | | | | | | | |
| | thickness ($\mu$m) | 17 | 18 | 17 | 17 | 20 | 20 | 15 |
| | light transmittance (%) @ 400nm | 79.2 | 75.2 | 79.7 | 76 | 77 | 79.9 | 74.3 |
| | converted light transmittance* (%) @ 400nm | 87.2 | 85.4 | 87.5 | 85.1 | 85.7 | 89.4 | 81.5 |

*Converted to 10 $\mu$m by Lambert-Beer Law

EP 3 153 539 B1

[Example 7]

In a 500 mL (internal volume) glass reaction vessel equipped with a stirrer and a nitrogen-gas charging/discharging tube was placed 400.0 g of DMIB as a solvent. Then 26.88 g (0.249 mol) of PPD and 73.13 g (0.249 mol) of s-BPDA were added thereto, and the mixture was stirred at 50°C, to provide a polyamic acid solution having a solid content of 18.2 %.

The polyamic acid solution was applied on a glass plate as a substrate with a bar coater. The resulting film was heated from 50°C to 120°C at a temperature-increasing rate of 5°C/min and heated at the same temperature for 60 minutes, then heated to 150°C and heated at the same temperature for 30 minutes, and then heated to 200°C and heated at the same temperature for 10 minutes, then heated to 250°C and heated at the same temperature for 10 minutes, and then heated to 450°C and heated at the same temperature for 5 minutes, to form a polyimide film on the glass plate.

The obtained polyimide film was peeled from the glass plate, and the light transmittance of the polyimide film was measured. The results are shown in Table 2.

[Example 8]

In a 500 mL (internal volume) glass reaction vessel equipped with a stirrer and a nitrogen-gas charging/discharging tube was placed 400.0 g of DMIB as a solvent. Then 40.50 g (0.202 mol) of ODA and 59.50 g (0.202 mol) of s-BPDA were added thereto, and the mixture was stirred at 50°C, to provide a polyamic acid solution having a solid content of 18.5 %.

The polyamic acid solution was applied on a glass plate as a substrate with a bar coater. The resulting film was heated from 50°C to 120°C at a temperature-increasing rate of 5°C/min and heated at the same temperature for 30 minutes, then heated to 150°C and heated at the same temperature for 10 minutes, and then heated to 200°C and heated at the same temperature for 10 minutes, then heated to 250°C and heated at the same temperature for 10 minutes, and then heated to 350°C and heated at the same temperature for 5 minutes, to form a polyimide film on the glass plate.

The obtained polyimide film was peeled from the glass plate, and the light transmittance of the polyimide film was measured. The results are shown in Table 2.

[Comparative Example 2]

A polyamic acid solution having a solid content of 18.2 % was obtained by the same operation as in Example 7 except that 400.0 g of NMP was used as the solvent.

The polyamic acid solution was applied on a glass plate as a substrate with a bar coater, and the resulting film was heated in the same way as in Example 7, to form a polyimide film on the glass plate. The obtained polyimide film was peeled from the glass plate, and the light transmittance of the polyimide film was measured. The results are shown in Table 2.

[Comparative Example 3]

A polyamic acid solution having a solid content of 18.5 % was obtained by the same operation as in Example 8 except that 400.0 g of NMP was used as the solvent.

The polyamic acid solution was applied on a glass plate as a substrate with a bar coater, and the resulting film was heated in the same way as in Example 8, to form a polyimide film on the glass plate. The obtained polyimide film was peeled from the glass plate, and the light transmittance of the polyimide film was measured. The results are shown in Table 2.

Table 2

|  |  | Example 7 | Example 8 | Comparative Example 2 | Comparative Example 3 |
|---|---|---|---|---|---|
| polyamic acid |  |  |  |  |  |
| acid component | s-BPDA (mol%) | 100 | 100 | 100 | 100 |

(continued)

| | | Example 7 | Example 8 | Comparative Example 2 | Comparative Example 3 |
|---|---|---|---|---|---|
| diamine component | PPD (mol%) | 100 | | 100 | |
| | ODA (mol%) | | 100 | | 100 |
| solvent | | DMIB | DMIB | NMP | NMP |
| polyimide film | | | | | |
| | thickness ($\mu$m) | 48 | 46 | 51 | 59 |
| | light transmittance (%) @ 500nm | 43 | 79.7 | 35.8 | 47.3 |
| | converted light transmittance* (%) @ 500nm | 41.5 | 78.1 | 36.5 | 53.0 |
| *Converted to 50 $\mu$m by Lambert-Beer Law | | | | | |

**Claims**

1. Use of at least one solvent selected from the group consisting of N-methylformamide, N,N-dimethylpropionamide, N,N-dimethylisobutylamide, and tetramethylurea to improve the light transmittance of a polyimide film, wherein the polyimide film is produced by applying a polyamic acid solution composition which comprises a polyamic acid and said solvent to a substrate; and then imidizing the polyamic acid by subjecting the composition to heat treatment under the conditions that the highest heating temperature is 200°C or higher.

2. Use according to claim 1, wherein the polyamic acid is obtained from a monomer component comprising at least one monomer component selected from tetracarboxylic acid compounds having an alicyclic structure and diamines having an alicyclic structure in an amount of 25 mol% or more in total.

3. Use according to claim 1, wherein the polyamic acid is obtained from a monomer component comprising at least one monomer component selected from tetracarboxylic acid compounds containing fluorine and diamines containing fluorine in an amount of 25 mol% or more in total.

4. Use according to claim 1, wherein the polyamic acid is obtained from a monomer component comprising at least one monomer component selected from tetracarboxylic acid compounds having a fluorene structure and diamines having a fluorene structure in an amount of 25 mol% or more in total.

5. Use according to claim 1, wherein the polyamic acid is obtained from

   a tetracarboxylic acid component consisting of at least one selected from 3,3',4,4'-biphenyltetracarboxylic acid compound, 2,3,3',4'-biphenyltetracarboxylic acid compound, 4,4'-oxydiphthalic acid compound, and pyromellitic acid compound, and
   a diamine component consisting of at least one selected from 4,4'-diaminodiphenyl ether, and p-phenylenediamine.

**Patentansprüche**

1. Verwendung mindestens eines Lösungsmittels, ausgewählt aus der Gruppe bestehend aus N-Methylformamid, N,N-Dimethylpropionamid, N,N-Dimethylisobutylamid und Tetramethylharnstoff, um die Lichtdurchlässigkeit eines Polyimidfilms zu verbessern, wobei der Polyimidfilm hergestellt wird, indem eine Polyamidsäure-Lösungszusammensetzung, die eine Polyamidsäure und das Lösungsmittel umfasst, auf ein Substrat aufgebracht wird; und dann die Polyamidsäure imidisiert wird, indem die Zusammensetzung einer Wärmebehandlung unter den Bedingungen unterzogen wird, dass die höchste Erwärmungstemperatur 200°C oder höher ist.

**2.** Verwendung nach Anspruch 1, wobei die Polyamidsäure aus einer Monomerkomponente erhalten wird, die mindestens eine Monomerkomponente, ausgewählt aus Tetracarbonsäureverbindungen mit einer alicyclischen Struktur und Diaminen mit einer alicyclischen Struktur, in einer Menge von insgesamt 25 Mol-% oder mehr umfasst.

**3.** Verwendung nach Anspruch 1, wobei die Polyamidsäure aus einer Monomerkomponente erhalten wird, die mindestens eine Monomerkomponente, ausgewählt aus fluorhaltigen Tetracarbonsäureverbindungen und fluorhaltigen Diaminen, in einer Menge von insgesamt 25 Mol-% oder mehr umfasst.

**4.** Verwendung nach Anspruch 1, wobei die Polyamidsäure aus einer Monomerkomponente erhalten wird, die mindestens eine Monomerkomponente, ausgewählt aus Tetracarbonsäureverbindungen mit einer Fluorenstruktur und Diaminen mit einer Fluorenstruktur, in einer Menge von insgesamt 25 Mol-% oder mehr umfasst.

**5.** Verwendung nach Anspruch 1, wobei die Polyamidsäure erhalten wird aus einer Tetracarbonsäurekomponente, die aus mindestens einer Verbindung besteht, die ausgewählt ist aus 3,3',4,4'-Biphenyltetracarbonsäureverbindung, 2,3,3',4'-Biphenyltetracarbonsäureverbindung, 4,4'-Oxydiphthalsäureverbindung und Pyromellithsäureverbindung, und
einer Diaminkomponente, die aus mindestens einer der folgenden Verbindungen besteht: 4,4'-Diaminodiphenylether und p-Phenylendiamin.

## Revendications

**1.** Utilisation d'au moins un solvant sélectionné dans le groupe consistant en le N-méthylformamide, le N,N-diméthylpropionamide, le N,N-diméthylisobutylamide, et la tétraméthylurée pour améliorer la transmittance de lumière d'un film de polyimide, dans laquelle le film de polyimide est produit par application d'une composition de solution de polyacide amide qui comprend un polyacide amide et ledit solvant sur un substrat ; puis imidisation du polyacide amide par soumission de la composition à un traitement thermique dans des conditions selon lesquelles la plus haute température de chauffage est supérieure ou égale à 200 °C.

**2.** Utilisation selon la revendication 1, dans laquelle le polyacide amide est obtenu à partir d'un composant monomère comprenant au moins un composant monomère sélectionné parmi des composés acide tétracarboxylique présentant une structure alicyclique et des diamines présentant une structure alicyclique en une quantité supérieure ou égale à 25 % en mole au total.

**3.** Utilisation selon la revendication 1, dans laquelle le polyacide amide est obtenu à partir d'un composant monomère comprenant au moins un composant monomère sélectionné parmi des composés acide tétracarboxylique contenant du fluor et des diamines contenant du fluor en une quantité supérieure ou égale à 25 % en mole au total.

**4.** Utilisation selon la revendication 1, dans laquelle le polyacide amide est obtenu à partir d'un composant monomère comprenant au moins un composant monomère sélectionné parmi des composés acide tétracarboxylique présentant une structure fluorène et des diamines présentant une structure fluorène en une quantité supérieure ou égale à 25 % en mole au total.

**5.** Utilisation selon la revendication 1, dans laquelle le polyacide amide est obtenu à partir

d'un composant acide tétracarboxylique consistant en au moins un sélectionné parmi un composé acide 3,3',4,4'-biphényltétracarboxylique, un composé acide 2,3,3',4',-biphényltétracarboxylique, un composé acide 4,4'-oxydiphtalique, et un composé acide pyromellitique, et
d'un composant diamine consistant en au moins l'un sélectionné parmi l'éther 4,4'-diaminodiphényle, et la p-phénylènediamine.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012041473 A

- JP 2013023597 A